# EUROPÄISCHE PATENTSCHRIFT

(11) **EP 3 226 721 B1**
(45) Veröffentlichungstag und Bekanntmachung des Hinweises auf die Patenterteilung: **01.08.2018**
(21) Anmeldenummer: 15797628.3
(22) Anmeldetag: 10.11.2015
(51) Int. Cl.: A47B 9/00, H01R 4/24

(54) **ELEKTRISCH VERSTELLBARES TISCHSYSTEM UND VERFAHREN ZUR HERSTELLUNG EINES ELEKTRISCH VERSTELLBAREN TISCHSYSTEMS**
ELECTRICALLY ADJUSTABLE TABLE SYSTEM AND METHOD FOR PRODUCING AN ELECTRICALLY ADJUSTABLE TABLE SYSTEM
SYSTÈME DE TABLE À RÉGLAGE ÉLECTRIQUE ET PROCÉDÉ DE FABRICATION D'UN SYSTÈME DE TABLE À RÉGLAGE ÉLECTRIQUE

(30) Priorität: 01.12.2014 DE 102014117590
(43) Veröffentlichungstag der Anmeldung: 11.10.2017
(73) Patentinhaber: Logicdata Electronic & Software Entwicklungs GmbH, 8530 Deutschlandsberg (AT)
(72) Erfinder: KOCH, Walter, A-8541 Schwanberg (AT)
(74) Vertreter: Epping - Hermann - Fischer
(86) Internationale Anmeldenummer: PCT/EP2015/076220
(87) Internationale Veröffentlichungsnummer: WO 2016/087170

(56) Entgegenhaltungen:
- WO-A1-2014/146963
- DE-A1-102010 046 769
- US-B1- 6 964 372

## Beschreibung

Die Erfindung betrifft ein elektrisch verstellbares Tischsystem sowie ein Verfahren zur Herstellung eines solchen Tischsystems.

Elektrisch verstellbare Tischsysteme umfassen üblicherweise einen Tisch, einen oder mehrere elektrische Antriebe und entsprechende Steuerelektronik zur Ansteuerung der Antriebe. Die einzelnen Komponenten des Tischsystems können dabei über ein elektrisches Bussystem miteinander verbunden sein, um Versorgungsspannungen und Steuersignale zu übertragen. Für die Verkabelung der Komponenten sind dabei in der Regel fest mit den Komponenten verbundene Kabel vorgesehen, welche über Steckverbinder miteinander verbunden werden. Alternativ werden vorkonfektionierte Kabel fester Länge verwendet. Diese sind dabei auf größtmögliche Dimensionen eines Tisches ausgelegt. Bei kleineren Tischen ist es daher notwendig, Teile des Kabels in oder unter dem Tisch zu verstauen, beispielsweise durch Aufrollen oder Aufwickeln. Neben dem erhöhten Montageaufwand werden bei der herkömmlichen Verkabelung auch unnötig Kabel und damit Ressourcen verbraucht.

Das Dokument DE 10 2010 046 769 A1 zeigt einen Tisch mit mehreren Antrieben, die über durchgeschleifte Busleitungen miteinander verbunden sind. Ferner sind ein Netzteil und ein Bedienteil am Bus angeschlossen, so dass über die Busleitungen sowohl die Versorgungsspannung als auch Steuerbefehle des Bedienteils übertragen werden. Die Verbindung der einzelnen Komponenten mit dem Bussystem erfolgt über baugleiche Buchsen bzw. Stecker.

Das Dokument US 6,964,372 B1 zeigt ein Abstimmungssystem an einem Konferenztisch, bei dem mehrere Abstimmungsboxen an ein durchgehendes Flachbandkabel angeschlossen sind.

Eine zu lösende Aufgabe besteht daher darin, ein verbessertes Verkabelungskonzept für elektrisch verstellbare Tischsysteme anzugeben, welches sich effizienter umsetzen lässt.

Diese Aufgabe wird mit dem Gegenstand der unabhängigen Patentansprüche gelöst. Weiterbildungen und Ausgestaltungen sind Gegenstand der abhängigen Ansprüche.

Dem verbesserten Verkabelungskonzept liegt die Idee zugrunde, anstelle von vorkonfektionierten Kabeln für Komponenten bei einem Tischsystem einzelne, mehradrige, Kabelabschnitte zu verwenden, die über Schneidklemmtechnik, insbesondere über Schneidklemmverbinder miteinander verbunden werden, insbesondere bei einem Bussystem. Damit lassen sich die benötigten Kabelmengen für das Tischsystem optimieren. Dies führt zum einen dazu, dass weniger Kabel für die Verkabelung verbraucht wird. Des Weiteren ist es nicht mehr notwendig, überschüssige Kabellängen unter dem Tisch zu verstauen oder aufzuwickeln oder aufzurollen, da die Kabellänge optimal an die Tischdimensionen angepasst werden kann.

Eine mögliche Ausführungsform eines elektrisch verstellbaren Tischsystems gemäß dem verbesserten Verkabelungskonzept umfasst einen Tisch, wenigstens einen elektrischen Antrieb zur Verstellung des Tisches, eine Spannungsversorgung, ein Bedienteil und ein Bussystem. Der wenigstens eine Antrieb, die Spannungsversorgung und das Bedienteil sind an das Bussystem angeschlossen. Das Bussystem weist dabei mehrere mehradrige Kabelabschnitte auf, die über Schneidklemmverbinder miteinander elektrisch verbunden sind. Die Kabelabschnitte sind zum Beispiel als Flachbandkabel ausgeführt. Die Kabelabschnitte lassen sich etwa aus einem als Meterware verfügbaren mehradrigen Kabel herstellen. Als Flachbandkabel werden sämtliche mehradrige Kabel verstanden, in denen die Adern parallel nebeneinander geführt sind. Solche Flachbandkabel weisen einen rechteckigen oder im Wesentlichen rechteckigen Querschnitt auf. Dabei ist eine Oberfläche entlang der parallel geführten Adern glatt oder im Wesentlichen glatt, oder lässt alternativ die einzelnen Adern erkennen, so dass eine gewellte Oberfläche entsteht.

Die Flachbandkabel können auch mit einem asymmetrischen Profilquerschnitt ausgebildet sein, der an eine Form der Schneidklemmverbinder angepasst ist. Dadurch lässt sich eine eindeutige Verbindung oder Verschaltung gewährleisten, so dass ungewünschte elektrische Verbindungen verhindert werden können. Dies wirkt beispielsweise als Verpolschutz.

In einigen elektrisch verstellbaren Tischsystemen können beispielsweise intelligente Motoren eingesetzt werden, die neben dem eigentlichen elektrischen Antrieb auch eine Steuerungselektronik unmittelbar am Antrieb integriert haben. Solche intelligenten Antriebe nutzen üblicherweise die zur Verfügung gestellte Versorgungspannung zum Betrieb des jeweiligen Elektromotors, wobei die Ansteuerung über separate Steuersignale erfolgt. Die Elektromotoren sind beispielsweise als bürstenlose Gleichstrommotoren, englisch brushless DC, BLDC, motor, ausgeführt.

Solche Motoren sind an das Bussystem angeschlossen, wobei über das Bussystem sowohl die notwendige Versorgungsspannung als auch die Steuersignale für die einzelnen Antriebe übertragen werden. Die Steuersignale stehen dabei allen an das Bussystem angeschlossenen Teilnehmern zur Verfügung, werden beispielsweise jedoch nur von den über die Steuersignale adressierten Teilnehmern ausgewertet beziehungsweise umgesetzt.

Der wenigstens eine elektrische Antrieb dient beispielsweise zur Höhenverstellung des Tisches, wobei zu diesem Zweck auch ein zweiter elektrischer Antrieb vorgesehen sein kann, sodass an jedem Tischfuß beziehungsweise Tischbein ein eigener Antrieb vorgesehen ist. Statt für eine Höhenverstellung kann der elektrische Antrieb auch für eine Verstellung eines Neigungswinkels einer Tischplatte des Tisches verwendet werden. Andere Möglichkeiten der Verstellung sind selbstverständlich nicht ausgeschlossen.

Beispielsweise ist der wenigstens eine elektrische Antrieb mit einem ersten Ende eines der Kabelabschnitte fest verbunden, während das zugehörige zweite Ende dieses Kabelabschnitts über einen der Schneidklemmverbinder mit dem Bussystem verbunden ist. Somit kann beispielsweise bei eine Montage des Tischsystems der wenigstens eine elektrische Antrieb etwa in einem Tischbein des Tisches montiert werden, so dass der fest verbundene Kabelabschnitt zu Montagezwecken aus dem Tischbein oder einer entsprechend dafür vorgesehenen Öffnung herausragt. Dies gilt vorzugsweise auch für Tischsysteme mit mehreren solcher Antriebe, beispielsweise bei einem Tischgestell mit zwei verstellbaren Tischsäulen. Der oder die Kabelabschnitte der Antriebe können dann über ein bei der Montage konfektioniertes Kabel mittels der Schneidklemmverbinder elektrisch verbunden werden.

Gleichermaßen lassen sich auch das Bedienteil und/oder die Spannungsversorgung an das Bussystem anschließen, insbesondere an den speziell konfektionierten, das heißt in der Länge angepassten Kabelabschnitt.

Beispielsweise sind einer oder mehrere der verwendeten Schneidklemmverbinder an dem Tisch befestigt. Somit erfolgt gleichzeitig eine Fixierung der Kabelabschnitte am Tisch.

In verschiedenen Ausgestaltungen sind zumindest einige der Kabelabschnitte als Flachbandkabel ausgeführt. Dabei ist wenigstens einer der als Flachbandkabel ausgeführten Kabelabschnitte mit einem Klebematerial an dem Tisch befestigt, etwa am Tischgestell oder an der Tischplatte. Durch den rechteckigen oder im Wesentlichen rechteckigen Aufbau der Flachbandkabel kann eine stabile Befestigung einfach und sicher erreicht werden. Dies gilt insbesondere, wenn eine Oberfläche des Flachbandkabels entlang der parallel geführten Adern glatt oder im Wesentlichen glatt ausgeführt ist.

Als Klebematerial können beispielsweise ein doppelseitiges Klebeband oder doppelseitige Klebestreifen verwendet werden. Diese können trägerfrei oder auch mit Träger ausgestaltet sein, zum Beispiel als doppelseitige Klebebänder mit einem nichtklebenden Trägermaterial im Kern oder als Acrylatschaum-Klebebänder ohne nichtklebendes Trägermaterial.

In einigen Ausgestaltungen weist das Bussystem zwei Signalleitungen auf, die zur Übertragung von einer von der Spannungsversorgung bereitgestellten Versorgungsspannung und von auf der Versorgungsspannung aufmodulierten Steuersignalen vorgesehen sind. Bei einer solchen Konfiguration werden insbesondere nur diese beiden Signalleitungen benötigt um gleichzeitig Energie und Steuersignale über das Bussystem zu verteilen. Bei diesen Ausgestaltungen ist es möglich, dass das Bussystem entweder nur genau diese zwei Signalleitungen aufweist oder aber zusätzliche Leitungen, die zur Übertragung anderer Signale dienen.

In einer alternativen Ausgestaltung weist das Bussystem zwei Signalleitungen und wenigstens zwei Kommunikationsleitungen auf. Die zwei Signalleitungen sind zur Übertragung von einer von der Spannungsversorgung bereitgestellten Versorgungsspannung vorgesehen. Die wenigstens zwei Kommunikationsleitungen sind zur Übertragung von Steuersignalen vorgesehen. Die Steuersignale werden beispielsweise nach dem bekannten CAN-Busstandard übertragen, welcher ein Paar von CAN-Busleitungen benötigt. Die übrigen Kommunikationsleitungen, falls vorhanden, können zur Übertragung anderer Signale verwendet werden.

Die zu übertragenden Steuersignale können in beiden zuvor beschriebenen Alternativen von dem Bedienteil erzeugt werden. Somit ist das Bedienteil beispielsweise in der Lage Steuerbefehle für den wenigstens einen elektrischen Antrieb auf die Versorgungsspannung aufzumodulieren oder eben nach dem entsprechenden Übertragungsstandard über die wenigstens zwei Kommunikationsleitungen zu übertragen. Die Spannungsversorgung weist beispielsweise ein Netzteil auf, welches eingerichtet ist die Versorgungsspannung aus einer Netzwechselspannung zu erzeugen. Beispielsweise wird die Versorgungsspannung als eine Versorgungsgleichspannung erzeugt.

Eine solche Versorgungsgleichspannung ist vorzugsweise eine Kleinspannung im Bereich von etwa 20V bis 40V, welche unmittelbar zur Versorgung von Gleichstromantrieben verwendet werden kann. Neben dieser Versorgungsgleichspannung kann die Spannungsversorgung bzw. das Netzteil jedoch auch weitere Spannungen abgeben, wie etwa eine niedrigere Spannung im Bereich von etwa 5 V, welche zur Versorgung einer Steuerelektronik oder dergleichen genutzt werden kann. Diese geringere Spannung kann beispielsweise mit geringerer Leistung erzeugt werden, insbesondere im Vergleich zu einer benötigten Motorleistung.

Selbstverständlich können auch weitere Elemente an das Bussystem angeschlossen werden wie etwa Sensoren verschiedenster Art, die über einen jeweiligen der Kabelabschnitte mit dem Bussystem verbunden sind. Beispielsweise können Druck- oder Kraftsensoren angeschlossen werden, welche eine Belastung des Tisches messen. Dies kann unter anderem für bekannte Klemmschutzmaßnahmen oder dergleichen verwendet werden.

In einer weitergebildeten Ausgestaltungsform umfasst das Tischsystem ferner wenigstens einen weiteren Tisch mit wenigstens einem weiteren elektrischen Antrieb zur Verstellung des wenigstens einen weiteren Tisches. Dabei ist der wenigstens eine weitere elektrische Antrieb ebenfalls an das Bussystem angeschlossen. Selbstverständlich kann auch der weitere Tisch mehr als einen elektrischen Antrieb aufweisen. Somit sind für jeden der Tische des Tischsystems einer oder mehrere unabhängige elektrische Antriebe vorgesehen, die jeweils benötigte Leistung für einen Verstellvorgang von dem Bussystem abnehmen können. Diese Leistung wird von der Spannungsversorgung zur Verfügung gestellt.

Die beiden Tische, oder falls mehr Tische vom Tischsystem umfasst sind, die jeweiligen Tische, können über ein gemeinsames Bedienteil individuell bedient werden. Ebenso ist es aber auch möglich, dass mehrere Bedienteile an das Bussystem angeschlossen werden, um jedem oder nahezu jedem Tisch ein eigenes Bedienteil zur Verfügung zu stellen.

In verschiedenen Ausgestaltungen weist wenigstens einer der Schneidklemmverbinder ein erstes Grundteil zur Aufnahme eines ersten und eines zweiten der Kabelabschnitte und ein zweites Grundteil mit einem ersten und einem zweiten Satz von Schneidverbindern auf. Die Schneidverbinder sind derart elektrisch miteinander verbunden, dass ein elektrischer Kontakt zwischen entsprechenden Adern der Kabelabschnitte hergestellt werden kann. Somit können über den Schneidklemmverbinder die beiden in dem ersten Grundteil aufgenommenen Kabelabschnitte mit geringem Aufwand elektrisch miteinander verbunden werden. Dies geschieht vorzugsweise frei von Lötverbindungen, Schraubverbindungen oder Abisolieren.

Beispielsweise weist das erste Grundteil eine erste und eine zweite Kabelaufnahme auf, in die die zu verbindenden Kabelabschnitte eingelegt werden können. Das zweite Grundteil ist dabei in einem geschlossenen Zustand des Schneidklemmverbinders derart auf das erste Grundteil aufgebracht, dass die Schneidverbinder in die erste und zweite Kabelaufnahme eingreifen um in die eingelegten Kabelabschnitte einzudringen. Damit kann dann ein elektrischer Kontakt zwischen den entsprechenden Adern der Kabelabschnitte hergestellt werden.

Beispielsweise ist das zweite Grundteil mechanisch auf dem ersten Grundteil fixierbar, so dass die elektrische Verbindung sicher beibehalten wird. Die mechanische Verbindung kann beispielsweise über eine Schnappverbindung oder dergleichen realisiert sein. Um die für das Eindringen der Schneidverbinder in die Adern der Kabelabschnitten notwendige Kraft aufbringen zu können, ist in einigen Ausgestaltungen des Schneidklemmverbinders eine entsprechende Hebelanordnung vorgesehen, die durch Hebelübersetzung ein händisches Schließen des Schneidklemmverbinders mit geringem Kraftaufwand ermöglicht. Somit kann auch auf den Einsatz von Werkzeug, beispielsweise Zangen, verzichtet werden.

In einigen Ausgestaltungen ist wenigstens einer der Schneidklemmverbinder frei von einer Endbegrenzung für zu verbindende Kabelabschnitte. Dementsprechend kann wenigstens einer der Kabelabschnitte durch den Schneidklemmverbinder durchlaufen. Dies ermöglicht eine variable Positionierung des Schneidklemmverbinders auf den Kabelabschnitt, was insbesondere bei längeren Kabelabschnitten vorteilhaft ist. Beispielsweise kann so eine der anzuschließenden Komponenten mit ihrem jeweiligen Kabelabschnitt flexibel an das übrige Bussystem angeschlossen werden.

Gemäß einer Ausgestaltungsform eines Verfahrens zur Herstellung eines elektrisch verstellbaren Tischsystems gemäß dem verbesserten Verkabelungskonzept wird wenigstens ein elektrischer Antrieb an einen verstellbaren Teil eines Tisches montiert. Ferner werden eine Spannungsversorgung und ein Bedienteil montiert. Ein als Meterware verfügbares mehradriges Kabel wird zum Herstellen wenigstens eines Kabelabschnitts geeigneter Länge abgelenkt. Ein Bussystem, an dem der wenigstens eine Antrieb, die Spannungsversorgung und das Bedienteil angeschlossen sind, wird derart hergestellt, dass das Bussystem den wenigstens einen Kabelabschnitt geeigneter Länge sowie weitere mehradrige Kabelabschnitte aufweist, die über Schneidklemmverbinder miteinander elektrisch verbunden werden.

Somit kann eine Verkabelung eines solchen Tischsystems gemäß dem verbesserten Verkabelungskonzept mit geringem Aufwand bezüglich Material und Zeit erstellt werden.

Weitere Ausgestaltungsformen für das Verfahren ergeben sich unmittelbar aus den verschiedenen Ausgestaltungen des Tischsystems entsprechend der obigen Beschreibung.

Die Erfindung wird nachfolgend an mehreren Ausführungsbeispielen anhand von Figuren näher erläutert. Gleiche Bezugszeichen kennzeichnen hierbei Elemente oder Bauteile gleicher Funktion. Soweit sich Elemente oder Bauteile in ihrer Funktion entsprechen, wird deren Beschreibung nicht in jeder der folgenden Figuren wiederholt.

Es zeigen:
- Figur 1: eine Ausführungsform eines elektrisch verstellbaren Tischsystems,
- Figur 2: eine Ausführungsform eines Schneidklemmverbinders, und
- Figuren 3A und 3B: weitere Ausgestaltungsformen von Schneidklemmverbindern mit Kabelabschnitten.

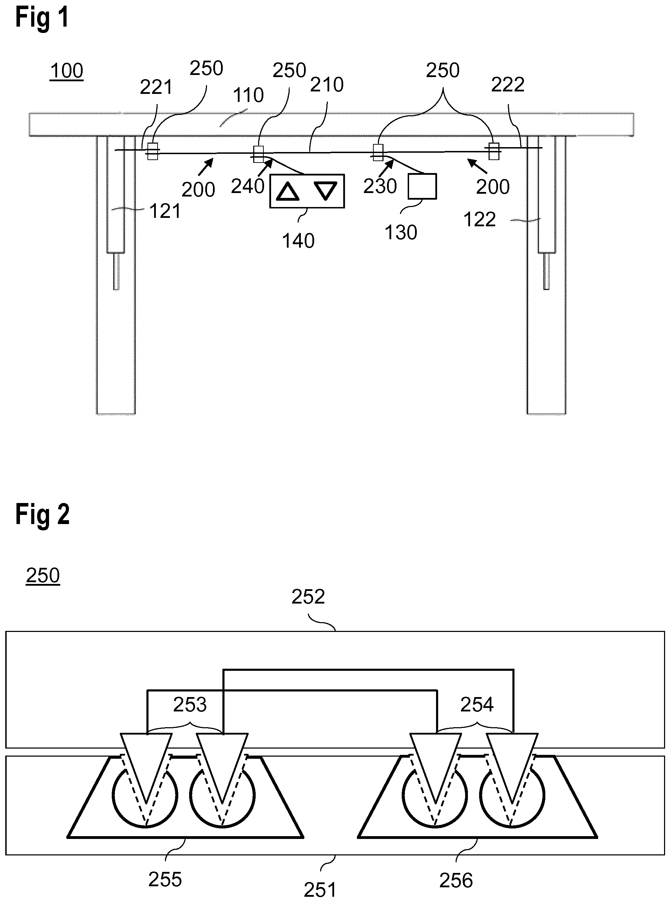

Figur 1 zeigt eine Ausführungsform eines elektrisch verstellbaren Tischsystems mit einem Tisch 100, der beispielsweise eine höhenverstellbare Tischplatte 110 aufweist. In jedem der beispielsweise zwei dargestellten Tischbeine ist ein elektrischer Antrieb 121, 122 vorgesehen. Zudem weist der Tisch eine Spannungsversorgung 130 und ein Bedienelement 140 auf. Ferner umfasst das elektrisch verstellbare Tischsystem ein Bussystem 200, an das die beiden Antriebe 121, 122, die Spannungsversorgung 130 und das Bedienteil 140 angeschlossen sind.

Das Bussystem 200 ist aus mehreren Kabelabschnitten 210, 221, 222, 230, 240 sowie entsprechenden Busverbindern gebildet. Diese Busverbinder sind als Schneidklemmverbinder 250 ausgeführt, welche die jeweils mehradrigen Kabelabschnitte elektrisch miteinander verbinden.

In verschiedenen Ausgestaltungen sind zumindest einige der Kabelabschnitte 210, 221, 222, 230, 240 als Flachbandkabel ausgeführt. Dabei ist wenigstens einer der als Flachbandkabel ausgeführten Kabelabschnitte mit einem Klebematerial an dem Tisch befestigt, etwa am Tischgestell oder an der Tischplatte. Als Klebematerial können beispielsweise ein doppelseitiges Klebeband oder doppelseitige Klebestreifen verwendet werden.

Alternativ oder zusätzlich können auch einer oder mehrere der Schneidklemmverbinder 250 unmittelbar am Tisch 100 befestigt sein, etwa an der Tischplatte 110 oder den Tischbeinen. Auch dadurch lässt sich das Bussystem 200 am Tisch befestigen.

Die Spannungsversorgung 130 weist beispielsweise ein Netzteil auf, welche aus einer Netzwechselspannung eine Versorgungsspannung, insbesondere eine Versorgungsgleichspannung erzeugt.

Im Betrieb der Anordnung versorgt die Spannungsversorgung 130 das Bussystem 200 mit einer solchen Versorgungsgleichspannung, die zur leistungsmäßen Versorgung der Antriebe 121, 122 dient. Die Versorgungsgleichspannung liegt etwa im Bereich von 20 V bis 40 V und beträgt beispielsweise 30 V. Neben der Versorgungsgleichspannung können über das Bussystem 200 auch Steuerbefehle oder -signale, insbesondere Bussteuerbefehle oder -signale übertragen werden, welche beispielsweise von dem Bedienteil 140 ausgesandt und von den Antrieben 121, 122 empfangen werden. Ebenso ist es aber auch möglich, dass die beiden Antriebe 121, 122 Statusmeldungen oder Messwerte eingebauter Sensoren auf das Bussystem legen, welche etwa im Bedienteil 140 ausgewertet werden können.

Selbstverständlich können auch weitere Elemente an das Bussystem 200 angeschlossen werden, wie etwa Sensoren verschiedenster Art. Beispielsweise können Druck- oder Kraftsensoren angeschlossen werden, welche eine Belastung des Tisches messen. Dies kann unter anderem für bekannte Klemmschutzmaßnahme oder dergleichen verwendet werden. Der Anschluss solcher weiterer Elemente erfolgt gemäß dem verbesserten Verkabelungskonzept ebenfalls über entsprechende mehradrige Kabelabschnitte, welche über Schneidklemmverbinder an das Bussystem angeschlossen sind.

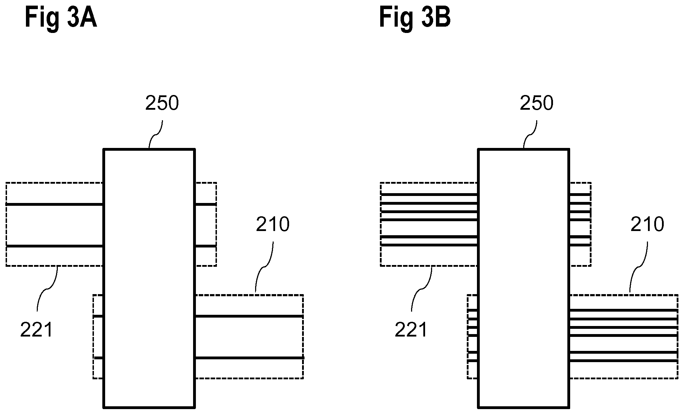

Das Bussystem 200 kann in verschiedenen Ausführungsformen mit einem einzigen Leitungspaar zur Bereitstellung der Versorgungsspannung ausgebildet sein. Die verschiedenen Bussignale, insbesondere Steuersignale, werden dabei beispielsweise auf die Versorgungsspannung aufmoduliert oder anders kodiert. Dementsprechend weist das Bussystem beispielsweise lediglich zwei Signalleitungen auf, die zur Übertragung von einer von der Spannungsversorgung 130 bereitgestellten Versorgungsspannung und von auf die Versorgungsspannung aufmodulierten Steuersignalen vorgesehen sind. Dies wird näher in Verbindung mit Figur 2 und Figur 3A dargestellt.

Figur 2 zeigt einen schematischen Querschnitt durch einen Schneidklemmverbinder 250, der ein erstes Grundteil 251 und ein zweites Grundteil 252 aufweist. In dem oberen, zweiten Grundteil 252 sind ein erster und ein zweiter Satz von Schneidverbindern 253, 254 vorgesehen, welche aus einem schneidenden, leitenden Material bestehen. Die beiden Sätze 253, 254 sind elektrisch derart miteinander verbunden, dass entsprechende Adern eines mehradrigen Kabelabschnitts miteinander verbunden werden können.

Im unteren, ersten Grundteil 251 sind eine erste und eine zweite Kabelaufnahme 255, 256 vorgesehen, die jeweils ein zweiadriges Kabel, vorzugsweise ein Flachbandkabel aufnehmen können. In dem dargestellten geschlossenen Zustand des Schneidklemmverbinders 250 greifen somit die Schneidverbinder 253, 254 in die eingelegten Kabelabschnitte ein, indem sie eine Isolierung durchdringen und in den leitenden Kern der Kabel hineinragen. Somit kann eine einfache Verbindung der beiden Kabelabschnitte erfolgen. Eine mechanische Fixierung des zweiten Grundteils 252 auf dem ersten Grundteil 251 ist lediglich aus übersichtsgründen nicht dargestellt.

Figur 3A zeigt schematisch ein Beispiel einer Draufsicht auf einen derartigen Schneidklemmverbinder 250, welcher Kabelabschnitte 210, 221, die jeweils zwei Adern aufweisen, verbindet. Hierbei ist der Kabelabschnitt 210 von rechts in den Schneidklemmverbinder 250 eingeführt, während der Kabelabschnitt 221 von links eingeführt ist. Selbstverständlich können die beiden Kabelabschnitte 210, 221 auch von der gleichen Seite eingeführt werden. Dies wird in dem dargestellten Beispiel dadurch ermöglicht, dass der Schneidklemmverbinder 250 frei von einer Endbegrenzung für zu verbindende Kabelabschnitte ist. Jedoch ist es in alternativen Ausführungsformen auch möglich, eine solche Endbegrenzung vorzusehen.

Figur 3B zeigt eine alternative Ausgestaltung, die sich von der Ausgestaltung der Figur 3A lediglich durch die Anzahl der zu verbindenden Adern der Kabelabschnitte 210, 221 unterscheidet. Insbesondere weisen die Kabelabschnitte 210, 221 jeweils zwei Signalleitungen zur Übertragung der Versorgungsspannung und vier weitere Leitungen beziehungsweise Adern auf, beispielsweise Kommunikationsleitungen. Jedoch ist auch die in Figur 3B dargestellte Wahl von vier zusätzlichen Leitungen lediglich beispielhaft zu verstehen, so dass auch eine kleinere oder größere Anzahl von zusätzlichen Leitungen vorgesehen werden kann.

Zusätzlich zu einem Leitungspaar für die Versorgungsspannung und für einen Masseanschluss ist nämlich auch eine Leitung oder ein Leitungspaar für die Übertragung von Steuersignalen vorgesehen werden. Beispielsweise erfolgt eine Übertragung dieser Steuersignale nach dem bekannten CAN-Busstandard, über den sich etwa Steuersignale zwischen beziehungsweise zu den elektrischen Antrieben übertragen lassen. Zusätzlich oder alternativ kann auch eine andere Steuerleitung oder ein Steuerleitungspaar vorgesehen werden, welche etwa mit einem proprietären Signalformat oder -protokoll beaufschlagt werden. Beispielsweise können so zusätzlich oder alternativ Teilnehmer an das Bussystem 200 angeschlossen werden, die nicht ein allgemeines Busformat wie etwa das CAN-Busprotokoll beherrschen.

Als weitere mögliche Leitung kann etwa eine Leitung zur Übertragung eines Betriebsmodussignals in dem Bussystem 200 vorgesehen werden. Beispielsweise kann durch die Wahl eines bestimmten Spannungspegels einer von mehreren möglichen Betriebsmodi oder Betriebszuständen ausgewählt werden. In einem normalen Betriebszustand gibt die Spannungsversorgung 130 beispielsweise die volle Spannung beziehungsweise Leistung ab. In diesem Betriebszustand werden beispielsweise Verstellvorgänge oder andere Vorgänge mit Leistungsbedarf ausgeführt. Die Versorgungsgleichspannung hat in diesem Betriebszustand beispielsweise ihren höchsten Wert, beispielsweise von etwa 30V.

In einem Schlafmodus ist das Tischsystem beispielsweise für einen niedrigeren Energieverbrauch eingerichtet, so dass etwa keine Verstellvorgänge vorgenommen werden und etwaige Anzeigen von Bedienteilen abgeschaltet sind. Dennoch verbleibt eine spannungsmäßige Grundversorgung, die etwa Hintergrundaktivitäten der angeschlossenen Teilnehmer ermöglicht. Beispielsweise sind alle an das Bussystem 200 angeschlossenen Teilnehmer in einem Energiesparmodus, um den Leistungsverbrauch des Gesamtsystems so gering wie möglich zu halten. Die Versorgungsgleichspannung hat in diesem Betriebszustand beispielsweise einen reduzierten Wert, beispielsweise von etwa 10V.

Neben dem Schlafmodus kann auch ein dritter Betriebszustand, nämlich ein Tiefschlafmodus vorgesehen sein, bei dem tatsächlich sämtliche Komponenten, die an das Bussystem 200 angeschlossen sind und mit Leistung versorgt werden, abgeschaltet werden. Davon ist lediglich ein dann vorhandener Aufwachschaltkreis der Spannungsversorgung 130 ausgenommen, der bei entsprechender Signalisierung über das Betriebsmodussignal dafür sorgt, dass wieder die entsprechend gewünschte Leistung an das Bussystem 200 abgegeben wird. Da solche Aufwachschaltungen grundsätzlich bekannt sind, wird deren spezielle Ausführung hier nicht näher erläutert. In diesem Tiefschlafmodus wird also beispielsweise keine Versorgungsgleichspannung an das Bussystem 200 abgegeben, beziehungsweise eine Versorgungsgleichspannung mit einem Wert von 0V.

Bei der Herstellung eines elektrisch verstellbaren Tischsystems gemäß dem verbesserten Verkabelungskonzept, wie in den obigen Beispielen beschrieben, kann somit eine vereinfachte Verkabelung mit verringertem Zeitaufwand und Materialaufwand erreicht werden. Beispielsweise wird beim Herstellen des entsprechenden Bussystems 200 ein als Meterware verfügbares mehradriges Kabel auf die geeignete Länge abgelängt, um beispielsweise den in Figur 1 dargestellten Kabelabschnitt 210 zu bekommen. Die Kabelabschnitte 221, 222 sind beispielsweise mit einem Ende fest am entsprechenden elektrischen Antrieb 121, 122 verbunden und können damit sozusagen die benötigte Länge des Kabelabschnitts 210 definieren. Auch die Kabelabschnitte 230, 240 an der Spannungsversorgung 130 und am Bedienteil 140 können an einem Ende fest angebracht sein, so dass das andere Ende an beliebiger Stelle über den Schneidklemmverbinder 250 an den Kabelabschnitt 210 befestigt werden kann. Jedoch können auch die Kabelabschnitte 230, 240 individuell bei der Montage des Tischsystems konfektioniert werden, wenn beispielsweise die entsprechenden Komponenten geräteseitig ebenfalls Schneidklemmverbinder aufweisen. Gleiches gilt für hier nicht dargestellte Sensoren, die sich nach dem gleichen Prinzip über Schneidklemmverbinder 250 an das Bussystem 200 anschließen lassen. Insbesondere wenn die Kabelabschnitte als Flachbandkabel ausgeführt sind, können diese vereinfacht über ein Klebematerial, insbesondere ein doppelseitiges Klebeband oder doppelseitige Klebestreifen, an dem Tisch 100 befestigt werden.

## Patentansprüche

1. Elektrisch verstellbares Tischsystem, umfassend
- einen Tisch (100);
- wenigstens einen elektrischen Antrieb (121, 122) zur Verstellung des Tisches (100);
- eine Spannungsversorgung (130);
- ein Bedienteil (140); und
- ein Bussystem (200), an dem der wenigstens eine Antrieb (121, 122), die Spannungsversorgung (130) und das Bedienteil (140) angeschlossen sind; **dadurch gekennzeichnet, dass** das Bussystem (200) mehrere mehradrige Kabelabschnitte (210, 221, 222, 230, 240) aufweist, die über Schneidklemmverbinder (250) miteinander elektrisch verbunden sind.

2. Tischsystem nach Anspruch 1,
bei dem der wenigstens eine elektrische Antrieb (121, 122) mit einem ersten Ende eines der Kabelabschnitte (221, 222) fest verbunden ist und das zugehörige zweite Ende dieses Kabelabschnitts (221, 222) über einen der Schneidklemmverbinder (250) mit dem Bussystem (200) verbunden ist.

3. Tischsystem nach Anspruch 1 oder 2,
bei dem wenigstens einer der Schneidklemmverbinder (250) an dem Tisch (100) befestigt ist.

4. Tischsystem nach einem der Ansprüche 1 bis 3,
bei dem das Bussystem (200) zwei Signalleitungen aufweist, die zur Übertragung von einer von der Spannungsversorgung (130) bereitgestellten Versorgungsspannung und von auf die Versorgungsspannung aufmodulierten Steuersignalen vorgesehen sind.

5. Tischsystem nach einem der Ansprüche 1 bis 3,
bei dem das Bussystem (200) zwei Signalleitungen, die zur Übertragung von einer von der Spannungsversorgung (130) bereitgestellten Versorgungsspannung vorgesehen sind, und wenigstens zwei Kommunikationsleitungen aufweist, die zur Übertragung von Steuersignalen vorgesehen sind.

6. Tischsystem nach Anspruch 4 oder 5,
bei dem das Bedienteil (140) eingerichtet ist, die über das Bussystem (200) zu übertragenden Steuersignale zu erzeugen.

7. Tischsystem nach einem der Ansprüche 1 bis 6,
ferner umfassend wenigstens einen Sensor, der über einen der Kabelabschnitte mit dem Bussystem (200) verbunden ist.

8. Tischsystem nach einem der Ansprüche 1 bis 7,
bei dem wenigstens einer der Schneidklemmverbinder (250) ein erstes Grundteil (251) zur Aufnahme eines ersten und eines zweiten der Kabelabschnitte und ein zweites Grundteil (252) mit einem ersten und einem zweiten Satz von Schneidverbindern (253, 254) aufweist, die derart elektrisch miteinander verbunden sind, dass ein elektrischer Kontakt zwischen entsprechenden Adern der Kabelabschnitte hergestellt werden kann.

9. Tischsystem nach Anspruch 8,
bei dem das erste Grundteil (251) eine erste und eine zweite Kabelaufnahme (255, 256) aufweist, in die die zu verbindenden Kabelabschnitte eingelegt werden können, wobei das zweite Grundteil (252) in einem geschlossenen Zustand des Schneidklemmverbinders (250) derart auf das erste Grundteil (251) aufgebracht ist, dass die Schneidverbinder (253, 254) in die erste und zweite Kabelaufnahme (255, 256) eingreifen um in die eingelegten Kabelabschnitte einzudringen.

10. Tischsystem nach einem der Ansprüche 1 bis 9,
bei dem wenigstens einer der Schneidklemmverbinder (250) frei von einer Endbegrenzung für zu verbindende Kabelabschnitte ist.

11. Tischsystem nach einem der Ansprüche 1 bis 10,
bei dem wenigstens einer der Kabelabschnitte (210, 221, 222, 230, 240) als Flachbandkabel ausgeführt und mit einem Klebematerial, insbesondere einem doppelseitiges Klebeband oder doppelseitigen Klebestreifen, an dem Tisch (100) befestigt ist.

12. Verfahren zur Herstellung eines elektrisch verstellbaren Tischsystems, das Verfahren umfassend
- Montage wenigstens eines elektrischen Antriebs (121, 122) an einem verstellbaren Teil eines Tisches (100);
- Montage einer Spannungsversorgung (130);
- Montage eines Bedienteils (140);
- Ablängen von als Meterware verfügbarem mehradrigen Kabel zum Herstellen wenigstens eines Kabelabschnitts (210) geeigneter Länge; und
- Herstellen eines Bussystems (200), an dem der wenigstens eine Antrieb (121, 122), die Spannungsversorgung (130) und das Bedienteil (140) angeschlossen sind, derart, dass das Bussystem (200) den wenigstens einen Kabelabschnitt (210) sowie weitere mehradrige Kabelabschnitte (221, 222, 230, 240) aufweist, die über Schneidklemmverbinder (250) miteinander elektrisch verbunden werden.

## Claims

1. Electrically adjustable table system, including
- a table (100);
- at least one electric drive (121, 122) for adjusting the table (100);
- a voltage supply (130);
- a control (140); and
- a bus system (200), to which the at least one drive (121, 122), the voltage supply (130) and the control (140) are connected;
**characterized in that** the bus system (200) comprises multiple multiwire cable sections (210, 221, 222, 230, 240), which are electrically connected to one another via insulation displacement connectors (250).

2. Table system according to claim 1,
in which the at least one electric drive (121, 122) is fixedly connected to a first end of one of the cable sections (221, 222) and the associated second end of these cable sections (221, 222) is connected to the bus system (200) via one of the insulation displacement connectors (250).

3. Table system according to claim 1 or 2,
in which at least one of the insulation displacement connectors (250) is fixed to the table (100).

4. Table system according to one of claims 1 to 3,
in which the bus system (200) comprises two signal lines, which are provided for the transmission of a supply voltage provided by the voltage supply (130) and control signals modulated onto the supply voltage.

5. Table system according to one of claims 1 to 3,
in which the bus system (200) comprises two signal lines, which are provided for the transmission of a supply voltage provided by the voltage supply (130), and at least two communication lines, which are provided for the transmission of control signals.

6. Table system according to claim 4 or 5,
in which the control (140) is configured to generate control signals to be transmitted via the bus system (200).

7. Table system according to one of claims 1 to 6, further including at least one sensor, which is connected to the bus system (200) via one of the cable sections.

8. Table system according to one of claims 1 to 7,
in which at least one of the insulation displacement connectors (250) comprises a first base part (251) for receiving a first and a second of the cable sections and a second base part (252) having a first and a second set of displacement connectors (253, 254), which are electrically connected to one another in such a way that an electric contact between corresponding wires of the cable sections can be produced.

9. Table system according to claim 8,
in which the first base part (251) comprises a first and a second cable reception (255, 256), in which the cable sections to be connected can be placed, wherein in a closed state of the insulation displacement connector (250) the second base part (252) is applied to the first base part (251) in such a way that the displacement connectors (253, 254) engage in the first and second cable reception (255, 256) in order to penetrate the placed cable sections.

10. Table system according to one of claims 1 to 9,
in which at least one of the insulation displacement connectors (250) is free from an end stop for cable sections to be connected.

11. Table system according to one of claims 1 to 10,
in which at least one of the cable sections (210, 221, 222, 230, 240) is configured as a ribbon cable and fixed to the table (100) using an adhesive material, in particular a double-sided adhesive tape or a double-sided adhesive strip.

12. Method for producing an electrically adjustable table system, the method comprising
- mounting at least one electric drive (121, 122) on an adjustable part of a table (100);
- mounting a voltage supply (130);
- mounting a control (140);
- cutting-to-size a multiwire cable available by the meter for producing at least one cable section (210) of suitable length; and
- producing a bus system (200), to which the at least one drive (121, 122), the voltage supply (130) and the control (140) are connected, in such a way that the bus system (200) comprises the at least one cable section (210) as well as further multiwire cable sections (221, 222, 230, 240), which are electrically connected to one another via insulation displacement connectors (250).

## Revendications

1. Système de table réglable électriquement, comprenant
- une table (100) ;
- au moins un entraînement électrique (121, 122) pour le réglage de la table (100) ;
- une alimentation (130) ;
- un panneau de commande (140) ; et
- un système de bus (200) auquel sont raccordés l'au moins un entraînement (121, 122), l'alimentation (130) et le panneau de commande (140) ;
- **caractérisé en ce que** le système de bus (200) comprend une pluralité de sections de câbles multiconducteurs (210, 221, 222, 230, 240) qui sont reliées électriquement par connecteurs à déplacement d'isolant (250).

2. Système de table selon la revendication 1,
dans laquelle l'au moins un entraînement électrique (121, 122) est relié de manière fixe à une première extrémité de l'une des sections de câble (221, 222) et la seconde extrémité associée de cette section de câble (221, 222) est reliée au système de bus (200) via l'un des connecteurs à déplacement d'isolant (250).

3. Système de table selon la revendication 1 ou 2,
dans laquelle au moins l'un des connecteurs à déplacement d'isolant (250) est fixé à la table (100).

4. Système de table selon l'une des revendications 1 à 3,
dans lequel le système de bus (200) comprend deux lignes de signaux qui sont prévues pour la transmission d'une tension d'alimentation fournie par l'alimentation (130) et des signaux de commande modulés sur la tension d'alimentation.

5. Système de table selon l'une des revendications 1 à 3,
dans laquelle le système de bus (200) comprend deux lignes de signaux qui sont prévues pour la transmission d'une tension d'alimentation fournie par l'alimentation en tension (130), et au moins deux lignes de communication qui sont prévues pour la transmission de signaux de commande.

6. Système de table selon la revendication 4 ou 5,
dans laquelle le panneau de commande (140) est configuré pour générer les signaux de commande à transmettre via le système de bus (200).

7. Système de table selon l'une des revendications 1 à 6, comprenant en outre au moins un senseur connecté au système de bus (200) via l'une des sections de câble.

8. Système de table selon l'une des revendications 1 à 7,
dans laquelle au moins l'un des connecteurs à déplacement d'isolant (250) comprend une première partie de base (251) pour recevoir une première et une seconde parties de câble et une seconde partie de base (252) comprenant des premier et second ensembles de connecteurs à déplacement d'isolant (253, 254) connectés électriquement entre eux de telle sorte que le contact électrique peut être établi entre les noyaux correspondants des sections de câble.

9. Système de table selon la revendication 8,
dans laquelle la première partie de base (251) comprend un premier et un second réceptacle de câble (255, 256) dans lequel les sections de câble à connecter peuvent être insérées, la seconde partie de base (252) étant appliquée sur la première partie de base (251) dans un état fermé du connecteur à déplacement d'isolant (250) de telle sorte que les connecteurs à déplacement isolant (253, 254) s'engagent dans les premier et second réceptacles de câble (255, 256) pour pénétrer les sections de câble insérées.

10. Système de table selon l'une des revendications 1 à 9, dans laquelle au moins l'un des connecteurs à déplacement d'isolant (250) est exempt d'une limite d'extrémité pour les sections de câble à connecter.

11. Système de table selon l'une des revendications 1 à 10, dans laquelle au moins l'une des sections de câble (210, 221, 222, 230, 240) est réalisée sous la forme d'un câble plat ruban et est fixée à la table (100) avec un matériau adhésif, en particulier un ruban adhésif double face ou une bande adhésive double face.

12. Procédé de fabrication d'un système de table réglable électriquement, le procédé comprenant:
- Montage d'au moins un entraînement électrique (121, 122) sur une partie réglable d'une table (100) ;
- Montage d'une alimentation (130) ;
- Montage d'une panneau de commande (140) ;
- Couper à la longueur du câble multiconducteur disponible au mètre pour produire au moins une section de câble (210) de longueur appropriée ; et
- Fabrication d'un système de bus (200) auquel au moins un entraînement (121, 122), l'alimentation électrique (130) et le panneau de commande (140) sont connectés de telle sorte que le système de bus (200) comprend là au moins une section de câble (210) et d'autres sections de câble multiconducteurs (221, 222, 230, 240) qui sont reliées électriquement par connecteurs à déplacement d'isolant (250) .
